# EUROPEAN PATENT APPLICATION

(11) **EP 3 120 803 A1**
(43) Date of publication of application: **25.01.2017**
(21) Application number: 15178180.4
(22) Date of filing: 24.07.2015
(51) Int. Cl.: A61C 8/00

(54) **RETENTION ELEMENT FOR ATTACHING A FIRST DENTAL COMPONENT TO A SECOND DENTAL COMPONENT AND DENTAL ASSEMBLY COMPRISING THE RETENTION ELEMENT**

(71) Applicant: Nobel Biocare Services AG, 8302 Kloten (CH)
(72) Inventor: Vonwiller, Stephan, 8404 Winterthur (CH)
(74) Representative: Capré, Didier

(57) **Abstract**

The invention relates to a retention element (1) for attaching a first dental component (20), such as an abutment, to a second dental component (30), such as a dental implant. The retention element (1) comprises a coronal attachment portion (2) for attaching the retention element (1) to the first dental component (20), and an apical attachment portion (4) for attaching the retention element (1) to the second dental component (30). The retention element (1) is elastically deformable at least in all directions perpendicular to the direction from the apical attachment portion (4) towards the coronal attachment portion (2). The apical attachment portion (4) comprises at least one projection (8) extending in one or more directions substantially perpendicular to the direction from the apical attachment portion (4) towards the coronal attachment portion (2). Further, the invention relates to a dental assembly comprising the retention element (1) and to a use of the retention element (1) for attaching a first dental component (20), such as an abutment, to a second dental component (30), such as a dental implant, outside a human or animal body.

## Description

### Field of the Invention

The present invention relates to a retention element for attaching a first dental component, such as an abutment, to a second dental component, such as a dental implant. Further, the invention relates to a dental assembly comprising such a retention element and the first dental component and/or the second dental component and to a use of such a retention element for attaching the first dental component to the second dental component outside a human or animal body.

### Background Art

Dental prostheses, such as dental crowns or dental bridges, are widely used for the treatment of partly or fully edentulous patients. These prostheses are commonly attached to dental implants placed in a patient's jaw bone with the use of an abutment arranged between implant and prosthesis. For this purpose, single-piece abutments, consisting of a single piece, or multi-piece abutments, comprising two or more separate pieces, may be employed.

When providing a patient with a dental prosthesis, the abutment has to be attached to the implant placed in the patient's jaw bone. Further, for the case of a multi-piece abutment, the different pieces of the abutment have to be attached to each other. Moreover, other dental components, such as impression taking components, e.g., open or closed tray impression posts, intra-oral scanning or desk top scanning locators, healing caps, temporary restorations etc., may have to be attached to the implant in the treatment process.

In these attachment processes, misfits or misalignments between the different dental components may occur, rendering the attachment complicated and causing the risk of improper placement of one or more of the components.

In particular, when mounting an abutment to a dental implant, it is difficult for a clinician to assess whether the abutment is properly seated, i.e., fully engaged with the implant. If the abutment is fixed to the implant in an incorrect position, e.g., by engaging and tightening a clinical screw, problems, such as an improper placement of the dental prosthesis, the formation of undesired gaps between different components etc., can arise and the strength of the connection can be compromised. These difficulties in attaching the abutment to the implant are further aggravated if the implant is placed in the patient's upper jaw bone, due to gravity.

One possible way of verifying whether the abutment is correctly seated in the implant is to take an X-ray image of the patient's jaw bone with the abutment in place. However, this approach renders the attachment process inefficient and expensive.

In order to prevent fixation of the abutment to the implant in an incorrect position, it is known to provide a height lift that prevents a clinical screw from engaging with the implant if the abutment is not fully seated or if the abutment is automatically forced into its correct position while tightening the screw. In this case, the abutment cannot be secured to the implant in an improper position by the clinician. However, this means that the clinician has to repeat the steps of removing the screw, checking the position of the abutment and reinserting the screw until the screw can be engaged, thus rendering the attachment process inefficient and cumbersome. Further, there are several possible reasons why the screw may not properly engage with the implant, such as an incorrect insertion of the screw or damaged threads on the screw and/or the implant. Hence, the fact that the screw cannot be engaged is not an unambiguous indication of an incorrect placement of the abutment.

US 8,033,826 B2 discloses an abutment for use with a dental implant. The abutment comprises a prosthetic portion adapted to support a prosthesis thereon and an insert. The insert extends into a passageway of the prosthetic portion and engages the subgingival end of the prosthetic portion. The insert includes flexible retention fingers that, upon insertion into the passageway, initially contract before reaching an enlarged retention groove and then expand outwardly into the enlarged retention groove to hold the insert onto the prosthetic portion.

However, in the case of the insert disclosed in US 8,033,826 B2, only the fingers, which form a small part of the entire insert, are flexible. Hence, these fingers are prone to wear and breakage, in particular, if the insert is repeatedly engaged with and removed from the prosthetic portion. For example, in a dental laboratory, a technician will have to engage and remove a prosthetic portion or other dental components repeatedly. Moreover, for example, also in the case that a patient is provided with a temporary restoration, the insert will have to be engaged and removed a number of times.

Hence, there remains a need for a reliable and efficient approach for attaching a first dental component, such as an abutment, to a second dental component, such as a dental implant, which provides a clear indication of whether the first and second dental components are properly attached to each other.

### Summary of the Invention

Accordingly, it is an object of the present invention to provide a retention element for attaching a first dental component, such as an abutment, to a second dental component, such as a dental implant, which efficiently provides reliable indication of whether the first and second dental components are properly attached to each other. Further, the invention aims to provide a dental assembly comprising such a retention element and a use of such a retention element for attaching the first dental component to the second dental component. These goals are achieved by a retention element with the technical features of claim 1, by dental assemblies with the technical features of claim 12 or 14 and by a use of the retention element with the technical features of claim 15.

The invention provides a retention element for attaching a first dental component, such as an abutment to a second dental component, such as a dental implant. The retention element comprises a coronal attachment portion for attaching the retention element to the first dental component, and an apical attachment portion for attaching the retention element to the second dental component. The retention element is elastically deformable at least in all directions perpendicular to the direction from the apical attachment portion towards the coronal attachment portion. The apical attachment portion comprises at least one projection extending in one or more directions substantially perpendicular to the direction from the apical attachment portion towards the coronal attachment portion.

Thus, the entire retention element is elastically deformable. The retention element is elastically deformable along its entire length. The length of the retention element extends along the longitudinal direction thereof, i.e., the direction from the apical attachment portion towards the coronal attachment portion. The entire retention element can thus be elastically deformed at least in or along all directions perpendicular to the direction from the apical attachment portion towards the coronal attachment portion, i.e., in or along all the transverse directions of the retention element. The apical attachment portion comprises at least one projection or protrusion extending from an outer surface of the remainder of the retention element in one or more directions substantially perpendicular to the direction from the apical attachment portion towards the coronal attachment portion.

The at least one projection or protrusion of the apical attachment portion is configured to be received in a corresponding cavity formed in a coronal portion of the second dental component, such as a dental implant.

The first dental component, such as an abutment, is attached to the second dental component, such as a dental implant, by attaching the apical attachment portion of the retention element to the second dental component and attaching the first dental component to the coronal attachment portion of the retention element.

When attaching the apical attachment portion of the retention element to the second dental component, the retention element is initially elastically deformed, i.e., elastically compressed, along the transverse directions of the retention element and subsequently restored to its initial shape when the at least one projection has been received in the corresponding cavity of the second dental component, due to the restoring force of the retention element. Hence, the apical attachment portion can be attached to the second dental component by snap fit in a reliable and efficient manner. The engagement of the at least one projection of the apical attachment portion with the corresponding cavity of the second dental component provides an audible and/or tactile feedback to a user, such as a clinician or a technician, e.g., in a dental laboratory, providing a clear and unambiguous indication that the retention element, and thus also the first dental component, is properly attached to the second dental component.

The whole retention element, rather than only a portion thereof, is elastically deformable along its transverse directions. In this way, a particularly high degree of flexibility of the retention element is achieved. Further, the entire retention element is elastically deformed upon attachment thereof to the second dental component, thus minimising the risk of wear or breakage of the retention element, even if the retention element is repeatedly engaged with and removed from the second dental component.

Therefore, the retention element of the invention provides a clear, reliable and efficient indication of whether the first dental component is properly attached to the second dental component.

The retention element may have a substantially cylindrical shape, e.g., with a substantially circular cross-section perpendicular to the direction from the apical attachment portion towards the coronal attachment portion, i.e., the longitudinal direction of the retention element.

The at least one projection or protrusion of the apical attachment portion extends in one or more directions substantially perpendicular to the longitudinal direction of the retention element, i.e., in one or more transverse directions thereof. In particular, the apical attachment portion may comprise at least one projection or protrusion which extends in plural transverse directions of the retention element, i.e., extends along a portion of the outer surface of the remainder of the retention element in the circumferential direction of the retention element. The at least one projection or protrusion may extend along 10% or more, 20% or more or 30% or more of the outer circumference of the remainder of the retention element.

The first dental component may be, for example, an abutment, e.g., a single-piece or a multi-piece abutment, an impression taking component, such as an open or closed tray impression post, an intra-oral scanning or desk top scanning locator, a healing cap, a temporary restoration or a final restoration.

The second dental component may be, for example, a dental implant or an implant analogue, e.g., for use in a dental laboratory.

For the case of a multi-piece abutment, e.g., a two-piece abutment, the first dental component may be one piece of the abutment and the second dental component may be another piece of the abutment. A base piece or unit of the multi-piece abutment may be attached to a dental implant by the retention element of the invention.

The first dental component and/or the second dental component may be made of, for example, a metal, a ceramic, a polymer or a composite material.

In particular, the first dental component may be an abutment made of a ceramic, a metal, a polymer or a composite material. The second dental component may be a dental implant made of, for example, a metal, such as titanium, a titanium alloy or stainless steel.

The retention element of the invention may further comprise an intermediate portion arranged between the coronal attachment portion and the apical attachment portion.

The retention element may have at least one portion extending from an apical end of the retention element to a coronal end of the retention element, the at least one portion being more flexible than the remainder of the retention element. This flexible portion of the retention element contributes to or even provides the elastic deformability of the retention element. Hence, the retention element can be configured in an elastically deformable manner in a simple and efficient way.

The at least one portion extending from the apical end of the retention element to the coronal end of the retention element may be made or formed of a material which is more flexible than a material of the remainder of the retention element. Alternatively or additionally, the at least one portion may have a configuration or structure with a higher degree of flexibility than the configuration or structure of the remainder of the retention element. For example, the at least one portion may be made more flexible by providing, for example, perforations, recesses, openings or the like therein. Also, e.g., the at least one portion may have a smaller thickness, i.e., wall thickness, than the remainder of the retention element.

The retention element may have two or more, three or more or four or more portions extending from the apical end of the retention element to the coronal end of the retention element, these portions being more flexible than the remainder of the retention element.

The retention element may have at least one cut-out or recessed portion extending from the apical end of the retention element to the coronal end of the retention element. The at least one cut-out or recessed portion contributes to or even provides the elastic deformability of the retention element. Forming the retention element with such an at least one cut-out or recessed portion provides a particularly flexible configuration of the retention element. Further, the retention element has an especially simple structure.

The retention element may be a hollow and/or tubular body, wherein the at least one cut-out or recessed portion penetrates an outer wall of the retention element. The retention element may have an open ring shape or open annular shape, i.e., the shape of a ring with an opening in the circumference thereof, or substantially a C-shape, in a cross-section perpendicular to the longitudinal direction of the retention element.

The coronal attachment portion of the retention element may be attachable to the first dental component, such as an abutment, by friction fit.

The coronal attachment portion of the retention element may comprise at least one projection or protrusion extending in one or more directions substantially perpendicular to the direction from the apical attachment portion towards the coronal attachment portion. The explanations and definitions provided above for the at least one projection or protrusion of the apical attachment portion also apply to the at least one projection or protrusion of the coronal attachment portion.

The at least one projection or protrusion of the coronal attachment portion is configured to be received in a corresponding cavity formed in an apical portion of the first dental component, such as an abutment. In this way, the coronal attachment portion can be reliably and efficiently attached to the first dental component by snap fit.

The at least one projection or protrusion of the coronal attachment portion extends in one or more directions substantially perpendicular to the longitudinal direction of the retention element, i.e., in one or more transverse directions thereof. In particular, the coronal attachment portion may comprise at least one projection or protrusion which extends in plural transverse directions of the retention element, i.e., extends along a portion of the outer surface of the remainder of the retention element in the circumferential direction of the retention element. The at least one projection or protrusion may extend along 10% or more, 20% or more or 30% or more of the outer circumference of the remainder of the retention element.

The apical attachment portion may comprise a plurality, e.g., two or more, three of more, four or more, or five or more, projections or protrusions, each extending in one or more directions substantially perpendicular to the direction from the apical attachment portion towards the coronal attachment portion.

The plurality of projections or protrusions may have the same or different extensions in the circumferential direction of the retention element. The plurality of projections or protrusions may have the same or different protruding heights from an outer surface of the remainder of the retention element, i.e., heights from this outer surface in one or more directions substantially perpendicular to the direction from the apical attachment portion towards the coronal attachment portion.

The plural projections or protrusions of the apical attachment portion may be sequentially or consecutively arranged in the circumferential direction of the retention element, i.e., so that one is arranged after the other in this circumferential direction. The plural projections or protrusions may be equidistantly spaced from each other or spaced from each other at different intervals in the circumferential direction of the retention element.

The plural projections or protrusions of the apical attachment portion are configured to be received in a corresponding cavity or corresponding cavities formed in the coronal portion of the second dental component, such as a dental implant.

The coronal attachment portion may comprise a plurality, e.g., two or more, three or more, four or more, or five or more, projections or protrusions, each extending in one or more directions substantially perpendicular to the direction from the apical attachment portion towards the coronal attachment portion.

The plurality of projections or protrusions may have the same or different extensions in the circumferential direction of the retention element. The plurality of projections or protrusions may have the same or different protruding heights from an outer surface of the remainder of the retention element, i.e., heights from this outer surface in one or more directions substantially perpendicular to the direction from the apical attachment portion towards the coronal attachment portion.

The plural projections or protrusions of the coronal attachment portion may be sequentially or consecutively arranged in the circumferential direction of the retention element, i.e., so that one is arranged after the other in this circumferential direction. The plural projections or protrusions may be equidistantly spaced from each other or spaced from each other at different intervals in the circumferential direction of the retention element.

The plural projections or protrusions of the coronal attachment portion are configured to be received in a corresponding cavity or corresponding cavities formed in the apical portion of the first dental implant, such as an abutment.

The number of projections or protrusions of the apical attachment portion may be different from the number of projections or protrusions of the coronal attachment portion. The number of projections or protrusions of the apical attachment portion may be larger or smaller than the number of projections or protrusions of the coronal attachment portion, e.g., by one, two, three, four or five, or by one or more, two or more, three or more, four or more, or five or more. Particularly preferably, the number of projections or protrusions of the apical attachment portion is smaller than the number of projections or protrusions of the coronal attachment portion.

At least one projection or protrusion of the apical attachment portion may be arranged congruently to at least one protrusion or projection of the coronal attachment portion, i.e., so that the at least one projection or protrusion of the apical attachment portion is arranged above the at least one projection or protrusion of the coronal attachment portion in the longitudinal direction of the retention element. At least one projection or protrusion of the apical attachment portion may be arranged so as to be offset or staggered from at least one projection or protrusion of the coronal attachment portion in the circumferential direction of the retention element. Further, also a combination of these two configurations is possible, i.e., some projections or protrusions may be arranged in a congruent manner and some projections or protrusions may be arranged in an offset or staggered manner.

At least one projection or protrusion of the apical attachment portion may be arranged so as to at least partly overlap at least one projection or protrusion of the coronal attachment portion in the circumferential direction of the retention element.

At least one projection or protrusion of the apical attachment portion may have an extension in the circumferential direction of the retention element which is the same as the extension of at least one projection or protrusion of the coronal attachment portion in the circumferential direction of the retention element. At least one projection or protrusion of the apical attachment portion may have an extension in the circumferential direction of the retention element which is different from, i.e., larger or smaller than, the extension of at least one projection or protrusion of the coronal attachment portion in the circumferential direction of the retention element.

The extension of each projection or protrusion of the apical attachment portion in the circumferential direction of the retention element may be the same as or different from, i.e., larger or smaller than, the extension of each projection or protrusion of the coronal attachment portion in the circumferential direction of the retention element. Particularly preferably, the extension of each projection or protrusion of the apical attachment portion in the circumferential direction of the retention element is larger than the extension of each projection or protrusion of the coronal attachment portion in the circumferential direction of the retention element.

At least one projection or protrusion of the apical attachment portion may have a protruding height from an outer surface of the remainder of the retention element, i.e., a height from this outer surface in one or more directions substantially perpendicular to the direction from the apical attachment portion towards the coronal attachment portion, which is the same as the protruding height of at least one projection or protrusion of the coronal attachment portion. At least one projection or protrusion of the apical attachment portion may have a protruding height from the outer surface of the remainder of the retention element which is different from, i.e., larger or smaller than, the protruding height of at least one projection or protrusion of the coronal attachment portion.

The protruding height of each projection or protrusion of the apical attachment portion may be the same as or different from, i.e., larger or smaller than, the protruding height of each projection or protrusion of the coronal attachment portion. Particularly preferably, the protruding height of each projection or protrusion of the apical attachment portion is larger than the protruding height of each projection or protrusion of the coronal attachment portion.

As has been detailed above, the retention element may have at least one portion extending from the apical end of the retention element to the coronal end of the retention element, the at least one portion being more flexible than the remainder of the retention element. The retention element may have at least one cut-out portion extending from the apical end of the retention element to the coronal end of the retention element. At least one projection or protrusion of the apical attachment portion and/or at least one projection or protrusion of the coronal attachment portion may be arranged adjacent to the at least one more flexible portion or the at least one cut-out portion of the retention element. In this way, a particularly reliable and efficient snap fit connection between the retention element and the first and/or the second dental component can be ensured.

The retention element may further comprise a through hole extending through the retention element in the direction from the coronal attachment portion towards the apical attachment portion. In this case, the first dental component, such as an abutment, can be fixed to the second dental component, such as a dental implant, via the retention element by means of a fixing element, such as a screw, that passes through the through hole formed in the retention element.

In particular, the first dental component may be provided with a through hole having a screw seat for retaining a head of the screw. A threaded lower portion of the screw may be inserted into a threaded bore formed in the second dental component, so that the first dental component can be reliably fixed to the second dental component via the retention element by means of the screw. By providing the retention element with such a through hole, a reversible fixed connection between the first and second dental components, i.e., a connection that can be easily released, can be obtained.

The retention element may have a marking, such as a colour code. Such a marking ensures that an incorrect use of the retention element is prevented. For example, the marking, such as the colour code, may indicate an outer diameter of the apical attachment portion and/or the coronal attachment portion. The marking, e.g., the colour code, may indicate a platform size of the first dental component, e.g., an abutment, and/or the second dental component, e.g., a dental implant, which is or are to be used with the retention element.

The number of projections or protrusions of the apical attachment portion may also indicate the implant platform size. For example, two protrusions may indicate a Narrow Platform (NP) size, three protrusions a Regular Platform (RP) size, and three or more protrusions a Wide Platform (WP) size.

The retention element may comprise an indication and/or tracking device, such as an RFID tag. The indication and/or tracking device may provide information on the first dental component and/or second dental component to be used with the retention element, such as platform sizes, connection types, implant types, implant sizes and lengths, date of placement, primary stability etc. The indication and/or tracking device, such as an RFID tag, may be housed or received in the retention element, e.g., in a wall thereof or in a projection or protrusion of the apical attachment portion or the coronal attachment portion.

The retention element may be integrally formed of a single material. The retention element may be made of, for example, a metal, such as titanium, a titanium alloy or stainless steel, a polymer or a composite material. In this way, the retention element can be configured in an elastically deformable manner in a particularly simple and reliable way.

The material of the retention element may be metallic, superelastic, amorphous etc.

The retention element may be manufactured, for example, by injection moulding, milling, such as CNC milling, turning etc. For example, the retention element may be manufactured by injection moulding using coloured plastic, e.g., so as to provide a colour code as a marking. If the retention element is made of a metal, such as titanium, a titanium alloy or stainless steel, the retention element may be anodised.

The invention further provides a dental assembly comprising the retention element of the invention and a first dental component, such as an abutment. The explanations and definitions provided above for the retention element and the first dental component fully apply to the dental assembly of the invention.

The dental assembly of the invention provides the effects and advantages already described in detail above for the retention element of the invention.

The first dental component may be, for example, an abutment, e.g., a single-piece or a multi-piece abutment, an impression taking component, such as an open or closed tray impression post, an intra-oral scanning or desk top scanning locator, a healing cap, a temporary restoration or a final restoration.

The first dental component may have at least one cavity formed in an apical portion thereof for receiving the at least one projection or protrusion of the coronal attachment portion of the retention element. Alternatively, the apical portion of the first dental component may be configured for attachment to the coronal attachment portion of the retention element, for example, by friction fit.

The dental assembly may further comprise a second dental component.

The second dental component may be, for example, a dental implant or an implant analogue, e.g., for use in a dental laboratory.

For the case of a multi-piece abutment, e.g., a two-piece abutment, the first dental component may be one piece of the abutment and the second dental component may be another piece of the abutment. A base piece or unit of the multi-piece abutment may be attached to a dental implant by the retention element of the invention.

The retention element may be made of the same material as the first dental component or a different material. The retention element may be made of the same material as the second dental component or a different material. If the retention element is made of a material which is different from that of the first dental component, e.g., an abutment, the retention force provided by the retention element can be appropriately chosen.

The second dental component has at least one cavity formed in a coronal portion thereof for receiving the at least one projection or protrusion of the apical attachment portion of the retention element.

The second dental component, such as a dental implant, may have a threaded bore for receiving a threaded portion of a screw, such as that described above, and the retention element may have a through hole extending through the retention element in the longitudinal direction of the retention element, as has been detailed above. The first dental component, such as an abutment, may be provided with a through hole having a screw seat for retaining a head of the screw. In this way, the first dental component and the retention element can be fixed to the second dental component in a reversible manner by means of the screw.

The invention further provides a dental assembly comprising the retention element of the invention and a second dental component, such as a dental implant. The explanations and definitions provided above for the retention element and the second dental component fully apply to the dental assembly of the invention.

The dental assembly of the invention provides the effects and advantages already described in detail above for the retention element of the invention.

Moreover, the invention provides a use of the retention element of the invention for attaching a first dental component, such as an abutment, to a second dental component, such as a dental implant, inside or outside a human or animal body. For example, the retention element of the invention may be used for attaching first and second dental components to each other in a dental laboratory, e.g., using a jaw bone model.

The use of the retention element of the invention provides the effects and advantages already described in detail above for the retention element of the invention.

### Brief Description of the Drawings

Hereinafter, non-limiting examples of the invention are explained with reference to the drawings, in which:

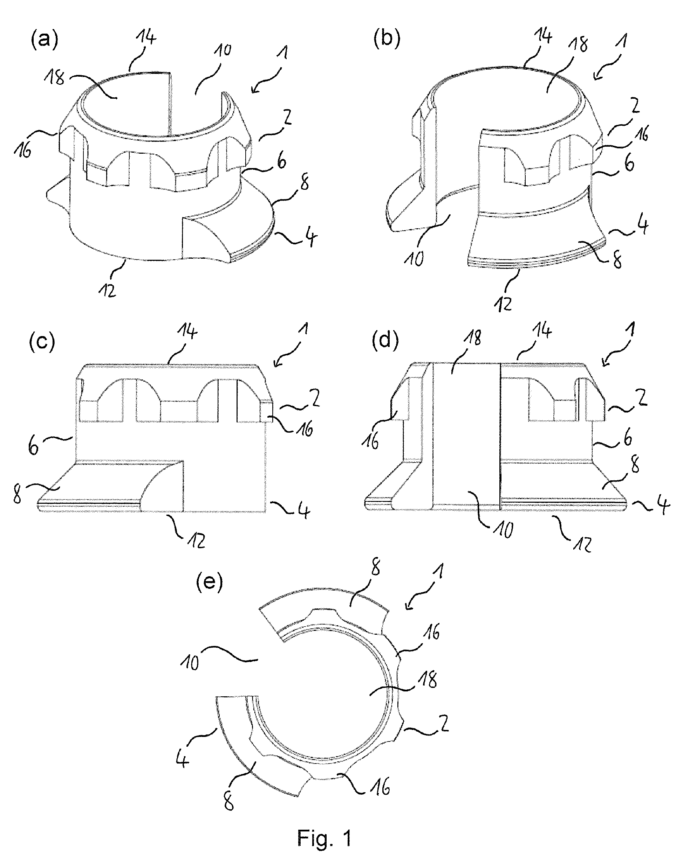

- Fig. 1: shows a retention element according to an embodiment of the present invention, wherein Fig. 1(a) is a perspective view of the retention element from a first angle, Fig. 1(b) is a perspective view of the retention element from a second angle, Fig. 1(c) is a side view of the retention element from a first side, Fig. 1(d) is a side view of the retention element from a second side, and Fig. 1(e) is a top view of the retention element;

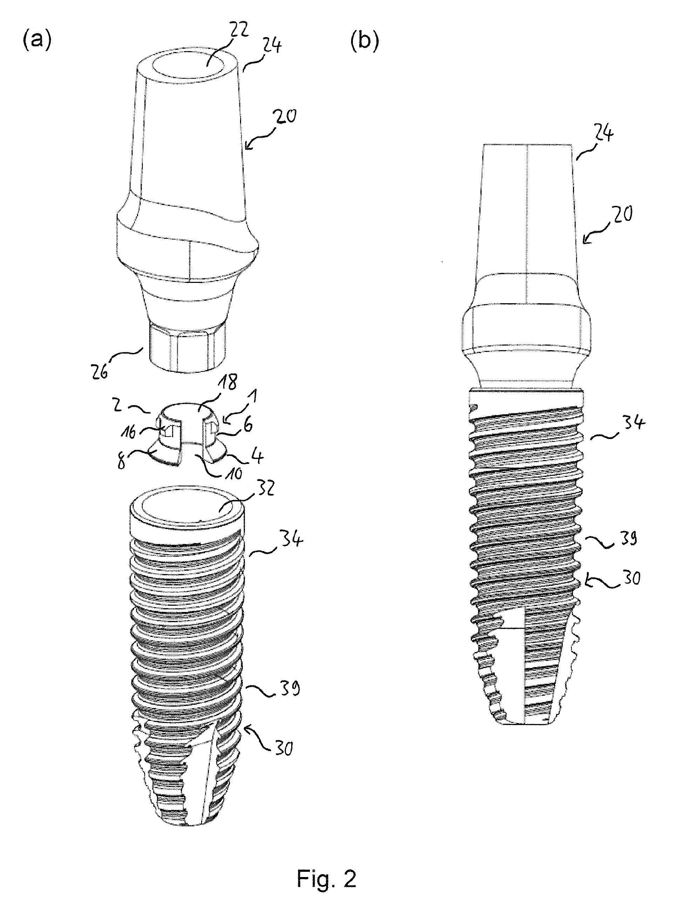

- Fig. 2: shows a dental assembly according to an embodiment of the present invention, comprising the retention element shown in Fig. 1, an abutment and a dental implant, wherein Fig. 2(a) is an exploded perspective view of the dental assembly, and Fig. 2(b) is a side view of the dental assembly, showing the dental assembly in the assembled state;

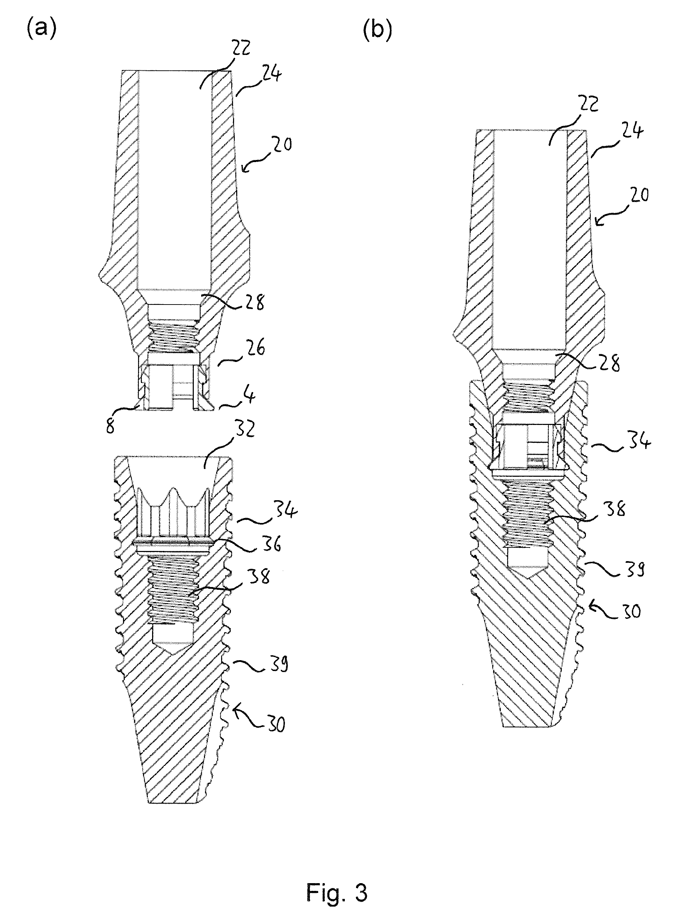

- Fig. 3: shows the dental assembly according to the embodiment of the present invention, wherein Fig. 3(a) is a cross-sectional view of the dental assembly, showing the abutment with the retention element attached thereto prior to attachment to the dental implant, and Fig. 3(b) is a cross-sectional view of the dental assembly, showing the dental assembly in the assembled state;

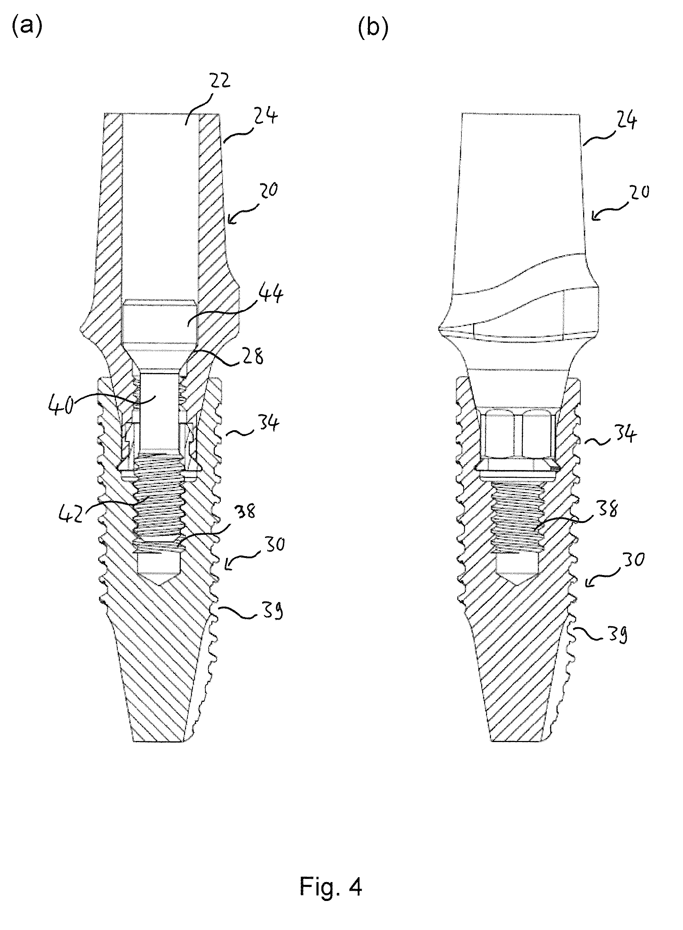

- Fig. 4: shows the dental assembly according to the embodiment of the present invention, wherein Fig. 4(a) is a cross-sectional view of the dental assembly, illustrating a state in which the abutment is fixed to the dental implant by a screw, and Fig. 4(b) is a partly cross-sectional view of the dental assembly, showing the dental assembly in the assembled state; and

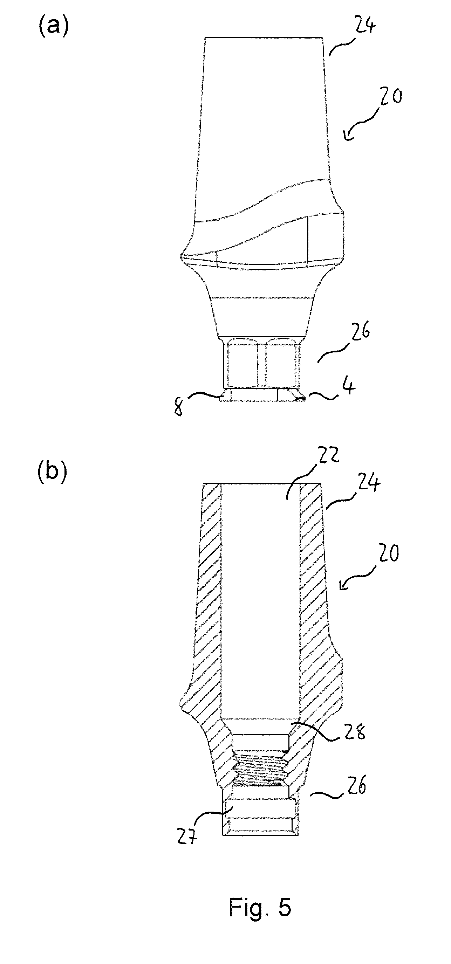

- Fig. 5: shows the abutment of the dental assembly according to the embodiment of the present invention, wherein Fig. 5(a) is a side view of the abutment with the retention element attached thereto, and Fig. 5(b) is a cross-sectional view of the abutment.

### Detailed Description of Preferred Embodiments

Preferred embodiments of the present invention will now be described with reference to the accompanying drawings.

Fig. 1 shows a retention element 1 according to an embodiment of the present invention for attaching a first dental component to a second dental component.

The retention element 1 comprises a coronal attachment portion 2 for attaching the retention element 1 to the first dental component (see Figs. 2 to 4), an apical attachment portion 4 for attaching the retention element 1 to the second dental component (see Figs. 2 to 4), and an intermediate portion 6 arranged between the coronal attachment portion 2 and the apical attachment portion 4.

The apical attachment portion 4 comprises two projections 8, each extending in plural directions substantially perpendicular to the direction from the apical attachment portion 4 towards the coronal attachment portion 2, i.e., to the longitudinal direction of the retention element 1.

The retention element 1 is made of a metal, such as titanium or a titanium alloy. The retention element 1 may be manufactured, for example, by milling, such as CNC milling. The retention element 1 has a substantially cylindrical shape with a substantially circular cross-section perpendicular to the longitudinal direction of the retention element 1 (see Figs. 1(a), (b) and (e). The retention element 1 is formed as a hollow, tubular body and has a cut-out portion 10 extending from an apical end 12 of the retention element 1 to a coronal end 14 of the retention element 1. The cut-out portion 10 penetrates an outer wall of the retention element 1, as is schematically shown in Figs. 1(a), (b), (d) and (e).

The cut-out portion 10 formed in the outer wall of the retention element 1 renders the entire retention element 1 elastically deformable in all directions perpendicular to the direction from the apical attachment portion 4 towards the coronal attachment portion 2, i.e., in all the transverse directions of the retention element 1. In particular, the retention element 1 can be elastically compressed in the transverse directions thereof when attaching the retention element 1 to the first dental component and/or the second dental component (e.g., Fig. 3).

The coronal attachment portion 2 comprises five projections 16 extending in plural transverse directions of the retention element 1, as is schematically shown in Figs. 1(a) to (e). Hence, the number of projections 8 of the apical attachment portion 4 is smaller than the number of projections 16 of the coronal attachment portion 2 by three.

The projections 8 of the apical attachment portion 4 and the projections 16 of the coronal attachment portion 2 allow for the retention element 1 to be attached to the second dental component and the first dental component, respectively, by snap fit, as will be explained in detail below with reference to Figs. 2 and 3.

As is shown in Figs. 1(a), (b), (d) and (e), the projections 8 of the apical attachment portion 4 are provided adjacent to the cut-out portion 10. In this way, a particularly reliable and efficient snap fit of the apical attachment portion 4 and the second dental component can be ensured.

The extensions of the projections 8 of the apical attachment portion 4 in the circumferential direction of the retention element 1 are larger than the extensions of the projection 16 of the coronal attachment portion 2 in the circumferential direction of the retention element 1 (see Fig. 1(e)).

Further, as is also shown, for example, in Fig. 1(e), protruding heights of the projections 8 of the apical attachment portion 4 from an outer surface of the remainder of the retention element 1 are larger than protruding heights of the projections 16 of the coronal attachment portion 2 from the outer surface of the remainder of the retention element 1. Two of the projections 16 of the coronal attachment portion 2 are arranged so as to fully overlap with the projections 8 of the apical attachment portion 4.

The retention element 1 further comprises a through hole 18 extending through the retention element 1 in the direction from the coronal attachment portion 2 towards the apical attachment portion 4.

Figs. 2 to 4 show a dental assembly according to an embodiment of the present invention, comprising the retention element 1, a dental abutment 20 as the first dental component and a dental implant 30 as the second dental component. The abutment 20 of this dental assembly is further shown in Fig. 5.

The abutment 20 is made of a metal, a ceramic, a polymer or a composite material. The implant 30 is made of a metal, for example, titanium, a titanium alloy or stainless steel.

As is shown in Figs. 2(a), 3(a), 3(b), 4(a) and 5(b), the abutment 20 has a through hole 22 extending through the abutment 20 from a coronal portion 24 to an apical portion 26 thereof. The through hole 22 comprises a screw seat 28 for resting a screw head (see Fig. 4(a)) thereon, as is schematically shown in Figs. 3(a), 3(b), 4(a) and 5(b).

The apical portion 26 of the abutment 20 is formed with an annular cavity 27 (see Fig. 5(b)) for receiving the projections 16 of the coronal attachment portion 2 of the retention element 1, as is shown in Figs. 3(a), 3(b) and 4(a). Hence, the coronal attachment portion 2 of the retention element 1 can be securely held within the apical end of the through hole 22 by snap fit.

As is shown in Figs. 2(a) and 3(a), the implant 30 has a recess 32 formed at a coronal portion 34 of the implant 30, for receiving the retention element 1 and the apical portion 26 of the abutment 20. The coronal portion 34 of the implant 30 is formed with an annular cavity 36 (see Fig. 3(a)) for receiving the projections 8 of the apical attachment portion 4 of the retention element 1, as is shown in Figs. 3(b), 4(a) and 4(b). Therefore, the apical attachment portion 4 of the retention element 1 can be securely held within the apical portion 34 of the implant 30 by snap fit.

Further, the implant 30 has a threaded bore 38 extending below the recess 32 in the apical direction of the implant 30, as is shown in Figs. 3(a), 3(b), 4(a) and 4(b). Moreover, the implant 30 has an outer threaded portion 39 for screwing the implant 30 into a patient's jaw bone (see Figs. 2 to 4).

When attaching the abutment 20 to the dental implant 30, the coronal attachment portion 2 of the retention element 1 is first attached to the abutment 20 by snap fit, i.e., by engaging the projections 16 with the annular cavity 27, as is shown in Figs. 3(a) and 5(a). Subsequently, the apical portion 26 of the abutment 20 is inserted into the recess 32 of the implant 30 so that the protrusions 8 of the apical attachment portion 4 of the retention element 1 are received in the annular cavity 36 formed in the apical portion 34 of the implant 30. Hence, the retention element 1 is securely held within this apical portion 34 by snap fit, thus reliably attaching the abutment 20 to the implant 30.

In the process of attaching the abutment 20, having the retention element 1 attached thereto, to the implant 30, the retention element 1 is first elastically deformed, i.e., elastically compressed, in the transverse directions thereof upon insertion of the retention element 1 into the recess 32, and subsequently restored to its initial shape, once the projections 8 are received in the annular cavity 36. This "snap in" process of the projections 8 provides an audible and tactile feedback to the user of the dental assembly, such as a clinician or a technician, e.g., in a dental laboratory, indicating that the abutment 20 with the retention element 1 attached thereto is properly seated in the implant 30 (see Figs. 2(b), 3(b), 4(a) and 4(b)).

After the abutment 20 has been properly attached to the implant 30 via the retention element 1, the abutment 20, the retention element 1 and the implant 30 are securely fixed in the attached state by inserting a screw 40 through the coronal opening of the through hole 22 of the abutment 20, passing the screw 40 through the through hole 18 of the retention element 1 and screwing the screw 40 into the threaded bore 38 of the implant 30. In the fully inserted state of the screw 40, which is illustrated in Fig. 4(a), a lower threaded portion 42 of the screw 40 is received within the threaded bore 38 of the implant 30 and a screw head 44 of the screw 40 rests on the screw seat 28 of the abutment 20, thereby firmly holding the abutment 20, the retention element 1 and the implant 30 in their relative positions.

In the manner detailed above, the abutment 20 can be fixed to an implant placed in a patient's jaw bone. Specifically, the implant 30 can be screwed into the patient's jaw bone by means of the outer threaded portion 39 of the implant 30. Once the implant is osseointegrated in the jaw bone, the abutment 20 is fixed to the implant 30 through the retention element 1 and the screw 40, as has been detailed above.

Further, the retention element 1 may be used for attaching first and second dental components, such as the abutment 20 and the implant 30, respectively, to each other outside a human or animal body, e.g., in a dental laboratory. In particular, in the manner detailed above, the abutment 20 can be fixed to a jaw bone model in the dental laboratory, e.g., using an implant analogue instead of the implant 30.

While the dental assembly according to the embodiment of the present invention detailed above comprises an abutment as the first dental component and a dental implant as the second dental component, the retention element of the invention may be used for the attachment of various other dental components to each other, as has been explained in detail above.

In particular, the first dental component may be, for example, an impression taking component, such as an open or closed tray impression post, an intra-oral scanning or desk top scanning locator, a healing cap, a temporary restoration, a final restoration etc.

The second dental component may be, for example, an implant analogue, e.g., for use in a dental laboratory, as has been explained in detail above.

For the case of a multi-piece abutment, e.g., a two-piece abutment, the first dental component may be one piece of the abutment and the second dental component may be another piece of the abutment. Further, a base piece or unit of the multi-piece abutment may be attached to a dental implant by the retention element of the invention.

If first and second dental components such as those given above are used instead of the abutment 20 and the dental implant 30, these components are attached to each other by means of the retention element 1 substantially in the same manner as detailed above for the case of the abutment 20 and the dental implant 30.

## Claims

1. A retention element (1) for attaching a first dental component (20), such as an abutment, to a second dental component (30), such as a dental implant, the retention element (1) comprising:
a coronal attachment portion (2) for attaching the retention element (1) to the first dental component (20); and
an apical attachment portion (4) for attaching the retention element (1) to the second dental component (30); wherein
the retention element (1) is elastically deformable at least in all directions perpendicular to the direction from the apical attachment portion (4) towards the coronal attachment portion (2), and
the apical attachment portion (4) comprises at least one projection (8) extending in one or more directions substantially perpendicular to the direction from the apical attachment portion (4) towards the coronal attachment portion (2).

2. The retention element (1) according to claim 1, wherein the retention element (1) has at least one portion extending from an apical end (12) of the retention element (1) to a coronal end (14) of the retention element (1), said at least one portion being more flexible than the remainder of the retention element (1).

3. The retention element (1) according to claim 1 or 2, wherein the retention element (1) has at least one cut-out portion (10) extending from an apical end (12) of the retention element (1) to a coronal end (14) of the retention element (1).

4. The retention element (1) according to claim 3, wherein the retention element (1) is a hollow body and the at least one cut-out portion (10) penetrates an outer wall of the retention element (1).

5. The retention element (1) according to any one of the preceding claims, wherein the coronal attachment portion (2) comprises at least one projection (16) extending in one or more directions substantially perpendicular to the direction from the apical attachment portion (4) towards the coronal attachment portion (2).

6. The retention element (1) according to claim 5, wherein the number of projections (8) of the apical attachment portion (4) is different from the number of projections (16) of the coronal attachment portion (2).

7. The retention element (1) according to any one of the preceding claims, wherein the apical attachment portion (4) comprises two or more projections (8), each extending in one or more directions substantially perpendicular to the direction from the apical attachment portion (4) towards the coronal attachment portion (2).

8. The retention element (1) according to any one of the preceding claims, further comprising a through hole (18) extending through the retention element (1) in the direction from the coronal attachment portion (2) towards the apical attachment portion (4).

9. The retention element (1) according to any one of the preceding claims, wherein the retention element (1) has a marking, such as a colour code.

10. The retention element (1) according to any one of the preceding claims, wherein the retention element (1) further comprises an indication and/or tracking device, such as an RFID tag.

11. The retention element (1) according to any one of the preceding claims, wherein the retention element (1) is made of a metal, a polymer or a composite material.

12. A dental assembly comprising the retention element (1) according to any one of the preceding claims and a first dental component (20), such as an abutment.

13. The dental assembly according to claim 12, further comprising a second dental component (30), such as a dental implant.

14. A dental assembly comprising the retention element (1) according to any one of claims 1 to 11 and a second dental component (30), such as a dental implant.

15. A use of the retention element (1) according to any one of claims 1 to 11 for attaching a first dental component (20), such as an abutment, to a second dental component (30), such as a dental implant.
